(19) Europäisches Patentamt
European Patent Office
Office européen des brevets

(11) **EP 4 386 586 A1**

(12) **EUROPEAN PATENT APPLICATION**

(43) Date of publication:
**19.06.2024 Bulletin 2024/25**

(21) Application number: **22212904.1**

(22) Date of filing: **12.12.2022**

(51) International Patent Classification (IPC):
*G06F 18/2135* (2023.01)   *G06F 18/22* (2023.01)
*G06F 18/2413* (2023.01)   *G06F 18/2433* (2023.01)
*G06V 10/22* (2022.01)   *G06V 10/24* (2022.01)
*G06V 10/28* (2022.01)   *G06V 10/44* (2022.01)
*G06V 10/50* (2022.01)   *G06V 10/74* (2022.01)
*G06V 10/764* (2022.01)   *G06V 10/82* (2022.01)
*G06V 10/98* (2022.01)   *G06V 20/80* (2022.01)
*G06V 20/00* (2022.01)   *G03G 21/04* (2006.01)
*H04N 1/00* (2006.01)   *G06F 18/211* (2023.01)
*G06V 10/771* (2022.01)

(52) Cooperative Patent Classification (CPC):
**G06V 20/80; G03G 21/046; G06F 18/211;**
**G06F 18/2135; G06F 18/22; G06F 18/24133;**
**G06F 18/2433; G06V 10/22; G06V 10/245;**
**G06V 10/28; G06V 10/443; G06V 10/50;**
**G06V 10/761; G06V 10/764; G06V 10/771;**   (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Université de Genève**
**1211 Genève 4 (CH)**

(72) Inventors:
• **Voloshynovskiy, Svyatoslav**
  **1222 Vesénaz (CH)**
• **Tutt, Joakim**
  **1213 Petit-Lancy (CH)**
• **Chaban, Roman**
  **1227 Carouge / Genève (CH)**
• **Taran, Olga**
  **1213 Petit-Lancy (CH)**
• **Holotyak, Taras**
  **1202 Genève (CH)**

(74) Representative: **Sammer, Thomas**
**per Mens Intellectual**
**Property Consulting Sàrl**
**Rue Agasse 54**
**1208 Genève (CH)**

(54) **AUTHENTICATION OF PHYSICAL OBJECTS BASED ON RELIABLE PARTS OF COPY DETECTION PATTERNS**

(57)   The present invention concerns a method for authentication of physical objects, by sampling and verifying of a probe image of a copy detection pattern (CDP) representing an object to be authenticated. The method comprises, at a training stage, the steps of

acquiring a set of reference templates $\{t_n\}_{n=1}^N$ ,

acquiring a set of training images $\{x_n\}_{n=1}^N$ ,
pre-processing of the training images, and, at an authentication stage,
acquiring a probe image $y$ (70) of a copy detection pattern (CDP) representing an object to be authenticated,
performing pre-processing of the probe image, and producing a decision about authenticity of the physical object.

The method further comprises, at said training stage, the steps of producing a set of estimates of reference templates,
determining a pattern reliability (60), and, at said authentication stage,
producing an estimate of probe reference template $\tilde{t}$ (80), applying the determined pattern reliability (60), by use of a mask $m$ reflecting said pattern reliability (60), for a weighted score computation (120, 121, 122),
the step of producing a decision about authenticity being based on at least a score $s$ (125) produced by said weighted score computation (120, 121, 122).

EP 4 386 586 A1

Fig. 2    **Authentication**

(52) Cooperative Patent Classification (CPC): (Cont.)
G06V 10/82; G06V 10/993; G06V 20/95;
H04N 1/00846; H04N 1/00883

**Description**

Field of the invention

The present invention pertains to a method for authentication of physical objects based on copy detection patterns as well as to a device implementing such an authentication method.

Background of the invention and state of the art

The present invention pertains to a method of reliable and secure authentication of a physical product based on copy detection patterns (CDP) added to a physical object, for example by printing, engraving, pressing or other adequate processes, enrolling several such CDPs by an imaging device that can be a scanner or mobile phone equipped with a camera, estimating pattern reliability after synchronization of acquired images of said CDP with its digital counterparts at the training stage, and, at the authentication stage, acquiring a probe CDP that might be represented by an authentic CDP or its fake counterpart, synchronizing the probe with its digital counterpart, identifying reliable and unreliable CDP patterns based on the above model of pattern reliability, building the mask for these components in a structure of similarity metrics, making a decision about the authenticity of examined CDP probe either by accepting it as an authentic one or rejecting it. The invention also concerns an apparatus implementing such an authentication method, corresponding computer program means as well as use of the method in the domain of protection, authentication, and quality control of physical objects.

In general, the present invention is directed to the protection of physical objects, such as physical product, printed documents or the like, by means of authentication of CDP using the authentication schemes.

Nowadays, counterfeiting and piracy are among the main challenges for modern economy. Existing methods of anti-counterfeiting are very diverse, ranging from watermarking techniques, special inking, holograms, electronic IDs, etc.. The drawbacks of these technologies are that they can be expensive, proprietary, and, often, authentication is performed in a non-digital way.

To present, there exist in general two types of approaches allowing to perform a digital protection of physical objects, namely, on the one side, Printing Unclonable Features (PUF), and, on the other side, Copy Detection Patterns (CDP).

A promising, newly emerged field in digital anti-counterfeiting technologies is the usage of PUF which are based on intrinsic forensic uncloneable features of physical objects, such as randomness of inks or paper micro-structures [1, 2, 3]. The unique PUF should be enrolled from each physical object. The features are then extracted and used for the identification or authentication purposes. The need to acquire PUF from each physical object has a lot of technical restrictions at the large scale or high speed manufacturing facilities. Moreover, the PUFs or the features extracted from them should be stored in secured databases and the authentication party should have an access to these databases on-line or store them locally. Therefore, the process of the acquisition might be very costly and time consuming and even not always technically feasible. Furthermore, the differences between the imaging conditions at the enrollment stage and those at the authentication or identification stage might create a mismatch between the extracted features that will manifest in unreliable and inaccurate authentication.

Another related technology is the CDP [4], which are generally hand-crafted random binary patterns printed at high resolution with a small symbol size that are difficult to clone [5, 11]. The advantages of CDP, in comparison to other technologies, are that they are cheap, easily integrable with a product, for example into a structure of a QR-code, and digitally readable. Existing halftone elements or security elements of packaging, secured labels, tax labels, banknotes, etc., printed or reproduced at high resolution, can also be considered as CDP in the scope of the present invention. They are also easy to integrate in a track-and-trace distribution framework. The main challenge of this technology today is that, although being mainly robust to common copy attacks when simple decision rules are used based on the similarity to the reference digital template or blueprint [4], it faces significant difficulties with the advanced machine-learning (ML) copy attacks [5,6,7,8,9,10]. It is demonstrated that a simple score based on Pearson correlation between the probe and reference digital template is incapable to distinguish the original CDP from its fakes. The usage of physical reference templates helps to enhance the performance of CDP in face of ML attacks [8]. However, the cost of acquisition of physical templates for each physical object, IT infrastructure management, its security, and a need to communicate each physical template to the authentication devices seriously restrict the scalability and practical deployment of physical templates for the CDP authentication. Therefore, the authentication based on digital templates looks much more attractive in practice but faces the low robustness in face of advanced clonability attacks.

Several attempts to enhance the authentication accuracy of CDP are known. One possible way, which is to use a similarity score based on the binarization of the probe and the Hamming distance between the binarized probe and reference digital template, does not produce any reliable authentication results as shown in [8]. Furthermore, besides the expected robustification to the various imaging acquisition distortions, it is also known that the binarization naturally leads to a loss of information that might be an additional factor of performance decrease. Thus, the problem of reliable authentication based on the reference digital template and simple score operating in the absence of information about the fakes is largely unsolved by such kind of prior art approach.

Another attempt to solve this problem consists in using the supervised two-class setting, when the samples of both original CDP and their fakes are available for training, such as reported in [12]. The possibility to use powerful supervised deep classifiers in two-class classification instead of simple similarity scores allows one to reliably distinguish original CDP from fakes, if the fakes used at test time match the statistics of those used during training time. However, in the case of mismatches, the method fails to distinguish original and fakes as shown in the same work [12]. In practice, the situation is further complicated by several factors: (a) High deviations in printing and imaging lead to large intra-class variabilities that further degrade the performance [13]; (b) ML attacks that are able to produce blueprint estimations with an accuracy score as high as 94% [8] lead to high quality CDP fakes that can be printed on the same or different models of printer; (c) the natural lack of exact prior knowledge for the authenticator about the fakes in field that can be produced in multiple ways and ambiguity regarding which fake will be used at the authentication/testing time considerably complicate the supervised approach; and finally (d) the absence of a reliable model of the printing-imaging channel complicates the design of optimal authentication rules. Therefore, there is a critical need in a one-class (OC) authentication scheme able to operate in the generalized setup of the above printing-imaging channel without any prior knowledge about the fakes.

Another alternative solution consists in the use of synthetically generated physical templates that closely approximate the true physical templates, such as reported in [14, 15]. It is demonstrated that this approach can achieve the performance of authentication systems based on physical templates while not using physical templates at the authentication stage and without any knowledge about the actual fakes. The core idea behind this approach is to train a generative model for a particular printing-imaging system that generates a synthetic physical template from the digital template using the above mentioned trained generative model. Being trained on a training dataset, this generative model is then applied to unseen data at the authentication stage. Alternatively, a reverse direction is also investigated when the probe is used to estimate the digital template and then a simple score metric in a form of the Hamming distance is used [14, 15]. The same work also suggested a hybrid approach when both the generation of synthetic physical templates from digital templates and estimation of digital templates from probes are used with the corresponding scores to produce a reliable authentication. Though being a powerful approach, it requires many pairs of digital templates and acquired images of CDP to train an accurate generative model or predictor. It also requires a very accurate synchronization between these pairs. Furthermore, the generative model or predictor being trained in the form of a deep network such as U-net might face some restrictions when the authentication should be performed on portable devices with limited memory and computational resources. Moreover, the model parameters' update on mobile devices might be a serious obstacle for scalable solutions.

Furthermore, all methods considered above based on simple scores such as similarity between the probe and reference template implicitly treat the distortions between the probe and reference template to be stationary over the CDP. A theoretical consideration of this model was performed in [16] where the symbol-wise model between the binarized probe and the reference template was assumed to be represented by a Binary Symmetric Channel characterized by an average bit error probability applicable to all symbols of CDP. As will be demonstrated in the following, this assumption is not valid for CDP. Therefore, all similarity metric scores considered above produce very poor results in distinguishing originals from fakes.

In short, the above mentioned procedures according to prior art inherently comprise several problems with respect to efficient and reliable authentication of physical objects without knowledge of fakes, since these approaches either require performing complex acquisition of security features from each physical object and access to these enrolled features at the moment of authentication or have only low robustness in face of advanced ML-based fakes.

The solutions according to prior art therefore do not entirely satisfy nowadays needs with respect to the protection of printed documents, secured labels, tax labels, packaging, banknotes and any other kind of physical objects, such that there is still a need for a method of providing efficient and reliable authentication.

Objectives of the invention

Thus, it is the object of the present invention to overcome the above mentioned difficulties and to realize a method of providing efficient and reliable authentication of physical objects, for example of printed documents, labels, packaging, banknotes, or the like.

In particular, the present invention shall allow to achieve a very low probability of error with respect to correctly rejecting fakes while ensuring a low probability of missing authentic objects. At the same time, such a method should allow to realize the authentication based on the digital templates or blueprints from which CDP are reproduced, without a need to enroll each physical object, to store the physical templates for each physical object under the protection, and to provide an access to the physical templates at the authentication stage, whilst remaining technically simple such as to maintain a high performance in terms of speed when applying the method on nowadays mobile processors.

It is another object of the present invention to provide a device implementing such an authentication method, to realize corresponding computer program means adapted to implement the proposed method, as well as to provide for use of the method for the protection of physical objects.

Solution according to the invention

To this effect, the present invention proposes a method for authentication of physical objects, by sampling and verifying of a test image of a copy detection pattern (CDP) representing an object to be authenticated, which is characterized by the features enumerated in claim 1 and which allows to achieve the objectives identified above, namely by using digital reference templates of said physical objects in combination with a reliability based metric.

In particular, the present invention realizes a method for authentication of physical objects based on copy detection patterns by use of a form of a special metric with learnable parameters with respect to the digital reference template. According to the present invention, the learnable metric is trained in such a way to ensure the selection of components of said copy detection patterns that are at the same time the most reliable ones and the most sensitive ones for the accurate differentiation of original patterns from fake patterns. The presence of patterns representing fake objects is not required at the training stage.

To this effect, the proposed method of physical object authentication based on CDP comprises using specially added random patterns or elements of secured labels, tax labels, banknotes, identity cards or packaging containing already existing halftone patterns of appropriate size and shape, such as to provide efficient and reliable authentication. The method for providing efficient and reliable object authentication according to the present invention distinguishes from prior art methods by the fact that, at the training stage, it comprises the step of training a printing-imaging model by identifying the regions of reference templates, also referred to as patterns, that are characterized by a pre-defined level of similarity between the reference template and the training images, creating a codebook of local regions in the reference template and associated pattern reliabilities expressed by a score function, as well as, at the authentication stage, using said codebook of patterns and associated reliabilities to find a similarity score between the reference template and a probe image to be authenticated by aggregating the weighted scores from each reference template's region and probe image, and producing a decision on the authenticity of the object to be authenticated.

More particularly, according to a preferred embodiment of the present invention, a method for authentication of physical objects comprises,

at said training stage, the steps of

- producing a set of estimates of reference templates $\left\{\tilde{\boldsymbol{t}}_{\boldsymbol{n}}\right\}_{n=1}^{N}$ from a set of pre-processed training images representing original objects,
- determining a pattern reliability by measuring the level of correspondence between pre-defined regions of the copy detection pattern (CDP) of at least part of the estimates of reference templates within said set of estimates of reference templates $\left\{\tilde{\boldsymbol{t}}_{\boldsymbol{n}}\right\}_{n=1}^{N}$ and corresponding reference templates within said set of reference templates $\left\{\boldsymbol{t}_{\boldsymbol{n}}\right\}_{n=1}^{N}$ , and

at said authentication stage, the steps of

- producing an estimate of probe reference template $\tilde{t}$ from said pre-processed probe image,
- applying the determined pattern reliability, by use of a mask $m$ reflecting said pattern reliability (60), in order to weigh regions of the copy detection pattern (CDP) according to its reliability and to allow its weighted use for a score computation between the estimate of probe reference template $\tilde{t}$ corresponding to probe image $\boldsymbol{y}$ and a reference template corresponding to an original object, wherein the step of
- producing a decision about authenticity of the physical object represented by the probe image $\boldsymbol{y}$ is based on at least a score s produced by said weighted score computation, said score s allowing to produce a decision $d$ (130, 140) on authenticity of the physical object.

The present invention is also directed to a device implementing such an authentication method, to corresponding computer program means adapted to implement the proposed method, as well as to various fields of use of the method for authentication of physical objects.

The present invention thus addresses the problems and objectives mentioned above by

- providing a new model describing the reliability of patterns within CDP;
- proposing a new method of authentication based on said model of pattern reliability able to perform authentication in a OC-classifier setup, i.e. under complete ignorance about actual fakes;
- validating the proposed approach on a real dataset of CDPs of originals and ML-based fakes based on codes designed with 1x1 symbol and produced on two industrial printers;
- comparing the proposed method with traditional authentication techniques.

Other features and advantages of the present invention are mentioned in the dependent claims as well as in the description disclosing in the following the invention in more details with reference to the figures.

Short description of the figures

The attached figures exemplarily and schematically illustrate the principles as well as several embodiments of the present invention.

Figure 1 presents a generic architecture of the training stage of a method according to the present invention, resulting in a pattern reliability estimation.
Figure 2 illustrates the authentication stage of a method according to the present invention, using the pattern reliability estimated at the training stage.
Figure 3 is a block-diagram illustrating training of a template estimation framework based on the training data representing original images and corresponding digital templates according to a specific loss.
Figure 4 schematically illustrates a digital template, a corresponding printed and scanned original code and an estimated template derived therefrom.
Figure 5 illustrates, for two types of acquisition devices (flatbed scanner and iPhone 12 Pro), the channel reliability expressed via the probability of bit error for 512 random binary patterns composing the entire CDP.

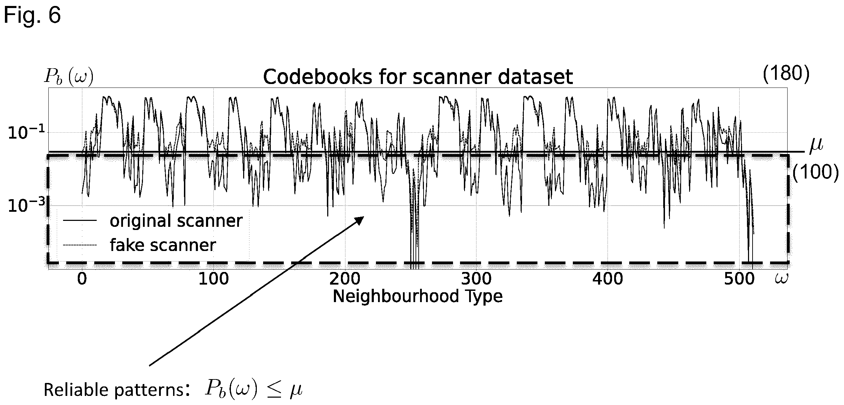

Figure 6 illustrates a concept of reliable patterns in the sense that all patterns with a probability of bit error below a threshold $\mu$ are considered as reliable ones.
Figure 7 illustrates the application of the proposed method of reliable selection of channels for different values of threshold parameter $\mu$ controlling the level of acceptable bit reliability based on weighted negative log-likelihood score (LLS) (220), weighted Hamming distance and weighted Pearson correlation for one of the acquisition devices (scanner) of figure 5.
Figure 8 illustrates the receiver operational characteristics (ROCs) for the scores presented in fig. 7 (scanner) and various values of threshold parameter $\mu$ for the optimal threshold selection based on Neyman-Pearson criterion.
Figure 9 illustrates the average probability of error for the optimal decision threshold selection according to the Bayesian approach, according to the weighted LLS and according to the Hamming distance for the scores presented in fig. 7 (scanner).
Figure 10 illustrates the analogous score distribution characteristics as in fig. 7 for the other of the acquisition devices (iPhone 12 Pro) of figure 5.
Figure 11 illustrates the analogous ROC characteristics as in fig. 8 for the scores presented in fig. 10 (iPhone 12 Pro).
Figure 12 illustrates the analogous average probability of error characteristics as in fig. 9 for the scores presented in fig. 10 (iPhone 12 Pro).
Figure 13 illustrates the nature of masking applied to the CDP of originals and fakes at different values of thresholds parameter $\mu$.
Figure 14 illustrates the results for typical unreliable and reliable patterns to explain the nature of enhanced scores for the reliable patterns and the need of their aggregation while excluding the unreliable ones.
Figure 15 illustrates an authentication scheme based on a combination of multiple scores obtained after the masking for OC-classification strategy.
Figure 16 illustrates an authentication system implemented in a form of a neural network where the probe, digital template and mask are concatenated together at the network input.
Figure 17 illustrates an authentication system implemented in a form of aggregated scores over the reliable patterns over the entire image size while only the scores corresponding to the reliable patterns are used for the authentication based on OC-classifier.

Detailed description of the invention

In the following, the invention shall be described in detail with reference to the above mentioned figures.
In general, a method for authentication of physical objects according to the present invention comprises two stages: A *training stage,* and an *authentication or testing stage.* Like in prior art methods, the proposed method for authentication comprises,

at said training stage, the steps of

- acquiring a set of reference templates $\{t_n\}_{n=1}^{N}$ (25) adapted for production of corresponding original physical objects,

- acquiring a set of training images $\{x_n\}_{n=1}^{N}$ (10) of copy detection patterns (CDP) representing original objects produced by use of said set of reference templates $\{t_n\}_{n=1}^{N}$ (25),

- performing pre-processing of the training images in the set of training images $\{x_n\}_{n=1}^{N}$, said pre-processing comprising alignment of the training images with the reference templates and, preferably, histogram matching to some reference sample representing an example of acquired high quality images and expurgating images with low quality due to failures and imperfections in the acquisition, as well as,

at said authentication stage, the steps of

- acquiring a probe image $y$ (70) of a copy detection pattern (CDP) representing an object to be authenticated,
- performing pre-processing of the probe image, said pre-processing comprising alignment of probe image $y$ (70) with the reference template associated with the corresponding original object and, preferably, histogram matching with the reference image and filtering low quality outliers, and
- producing a decision about authenticity of the physical object represented by the probe image $y$ (70).

Furthermore, in contrast to prior art methods, the proposed method for authentication comprises, in short, at the training stage, estimation of pattern reliabilities of the copy detection pattern (CDP) used and training of the authentication system, and at the authentication or testing stage, authentication of probe image $y$ as an original object or fake one by use of a corresponding digital template $t$ of said original object and of a pattern reliability provided during the training stage. In more detail, the proposed method for authentication comprises, at said training stage, the steps of

- producing a set of estimates of reference templates $\{\tilde{t}_n\}_{n=1}^{N}$ (40) from a set of pre-processed training images representing original objects,
- determining a pattern reliability (60) by measuring the level of correspondence between pre-defined regions of the copy detection pattern (CDP) of at least part of the estimates of reference templates within said set of estimates of reference templates $\{\tilde{t}_n\}_{n=1}^{N}$ (40) and corresponding reference templates within said set of reference templates $\{t_n\}_{n=1}^{N}$ (25), and,

at said authentication stage, the steps of

- producing an estimate of probe reference template $\tilde{t}$ (80) from said pre-processed probe image or alternatively directly proceeding with the pre-processed probe image which in this case is used as estimate of probe reference template $\tilde{t}$ (80),
- applying the determined pattern reliability (60), by use of a mask $m$ (110) reflecting said pattern reliability (60), in order to weigh regions of the copy detection pattern (CDP) according to its reliability and to allow its weighted use for at least a score computation (120, 121, 122) between the estimate of probe reference template $\tilde{t}$ (80) corresponding to probe image $y$ (70) and reference template (20) corresponding to an original object, wherein the step of
- producing a decision about authenticity of the physical object represented by the probe image $y$ (70) is based on at least a score s (125) produced by said weighted score computation (120, 121, 122), said score s allowing to produce a decision d (130, 140) on authenticity of the physical object.

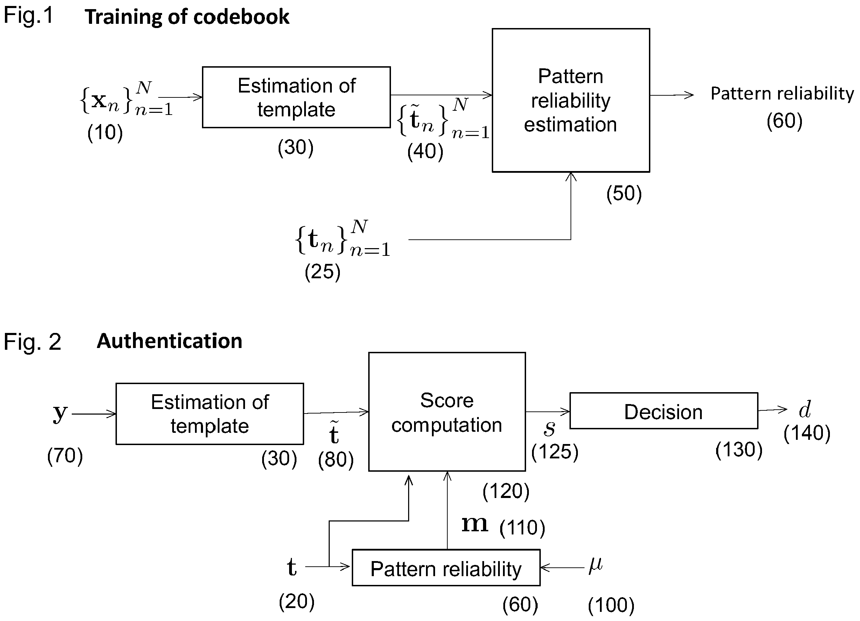

Figures 1 and 2 illustrate the steps introduced by the present invention into the training stage, respectively the authentication stage.

Pattern reliability estimation at training stage

Given the set of training images $\{\boldsymbol{x}_n\}_{n=1}^N$ (10) acquired from a set of authentic original objects for a given pair of printing device and imaging device or for a group of imaging devices, the goal of the training stage of a method according to the present invention is to estimate the pattern reliabilities of the copy detection patterns (CDP) used for authentication for each binary pattern of configuration $\omega$, where $\omega \in \{1,...,\Omega\}$ and $\Omega$ denotes the total number of distinctive patterns of defined shape within the digital reference template. Preferably, the pattern reliabilities may be expressed as a bit error probability between the corresponding patterns of the reference templates $\{\boldsymbol{t}_n\}_{n=1}^N$ (25) and the estimates of templates, i.e. the estimates of patterns, $\{\tilde{\boldsymbol{t}}_n\}_{n=1}^N$ (40) defined as $P_b(\omega)=Pr(\tilde{T}(\omega)\neq T(\omega)|\omega)$. For example, if the neighborhood of pattern $\omega$ is chosen to be 3x3, the total number of distinctive patterns is $\Omega=2^9=512$.

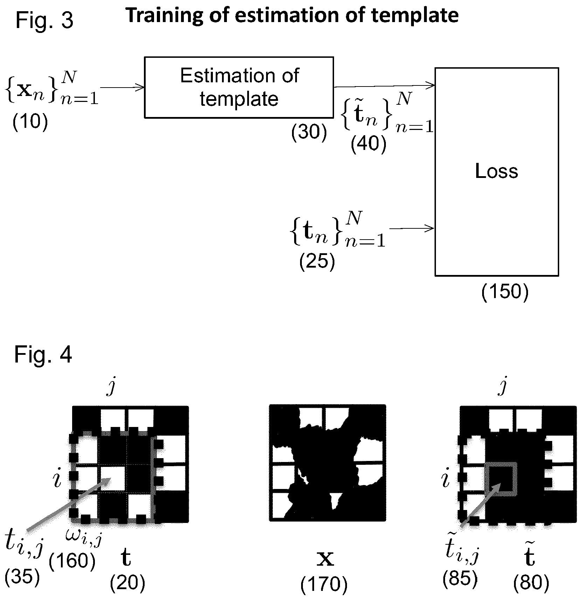

Given the acquired set of training images $\{\boldsymbol{x}_n\}_{n=1}^N$ (10), the training stage produces a set of estimates of digital templates $\{\tilde{\boldsymbol{t}}_n\}_{n=1}^N$ (40). To allow so, the training stage comprises the proper synchronization between the set of training images $\{\boldsymbol{x}_n\}_{n=1}^N$ (10) and the set of reference templates $\{\boldsymbol{t}_n\}_{n=1}^N$ (25) using either external or internal synchronization patterns, proper alignment of the dynamic range of acquired and synchronized images with respect to some validated reference pattern $x_{ref}$, preferably via an appropriate standard histogram matching, and filtering out of bad quality samples that might originate from some defects during the printing or blurring distortions during image acquisition and considered as out of distribution ones. At the end of the estimation step (30) of the templates $\{\tilde{\boldsymbol{t}}_n\}_{n=1}^N$ (40), a binarization function is applied to the pre-processed images $\{\boldsymbol{x}_n\}_{n=1}^N$ (10) that results into the estimated digital templates $\{\tilde{\boldsymbol{t}}_n\}_{n=1}^N$ (40). The binarization function can be a hand-crafted one, i.e. such that it is not based on data and special learning, for example as Otsu's binarization [17], or can be a learnable function as schematically shown in fig. 3. If the binarization function is learnable, then an appropriate network such as U-Net [18], ResNet [19] or Transformer ViT [20] is trained to ensure a high level of correspondence between the estimated templates and the reference templates according to a specific loss (150) that can be either binary cross-entropy, $L_2$-norm, $L_1$-norm, contrastive metric and also a discriminator as for example in pix2pix network [21]. The pattern reliability estimation results in a binary probability of error obtained as an average error for the patches of the same pattern found within the same printed pattern/code or within multiple patterns/codes.

The mechanism of the bit error is schematically illustrated in fig. 4. The pattern of configuration $\omega$ is placed in location (i,j) within the reference template $\boldsymbol{t}$ (20) that is denoted as $\omega_{i,j}$ (160). The pattern $\omega_{i,j}$ is centered at the coordinates (i, j) and is used as a reference. The pixel of interest $t_{i,j}$ (35) within pattern $\omega_{i,j}$ is used for the probability of bit error estimation. The configuration of the neighborhood pattern $\omega_{i,j}$ with respect to the value of the pixel $t_{i,j}$ determines the bit error probability that the value of the pixel $t_{i,j}$ will remain the same after printing, acquisition and template estimation, these three steps being symbolized by the series of three patterns shown in fig. 4. The acquired image of the printed pattern/code is shown in the middle of said series of three patterns of fig. 4 and is denoted as $\boldsymbol{x}$ (170). This image contains certain degradations with respect to $\boldsymbol{t}$ due to the printing artifacts known as dot gain, acquisition distortions, interpolation due to the synchronization between $\boldsymbol{t}$ and $\boldsymbol{x}$ and the processing pipeline of the imaging device. As a result, the template estimation (30) produces an estimate of template of the pixel $\tilde{t}_{i,j}$ (85) of the reference template of the pixel $t_{i,j}$ (35). The series of three patterns shown in fig. 4 illustrates a case when the pixel of interest $t_{i,j}$ has changed its value from 1 (white) to 0 (black) due to the above mentioned factors. It should be noted that the same situation might be observed for the flipping of 0 into 1 and that, overall, this process has a stochastic nature. Having estimated multiple cases of correspondence between the estimate of template of the pixel $\tilde{t}_{i,j}$ and its reference template of the pixel $t_{i,j}$ for the same pattern $\omega$ within the template $\boldsymbol{t}$ and, if necessary, using several images to improve the accuracy of estimation, one can obtain an approximation of the bit error probability $P_b(\omega)$ by measuring an average number of bit flips for the patches representing the same pattern $\omega$ normalized by the number of patches. Typically, one CDP pattern $\boldsymbol{t}$ contains hundreds of patches with the same pattern to produce a statistically reliable estimation of the bit error probability. If this is not sufficient, several CDP printed and acquired with the same equipment can be used for this purpose. Furthermore, if the imaging devices have similar imaging pipelines, one can estimate $P_b(\omega)$ from several images even if taken by such different devices.

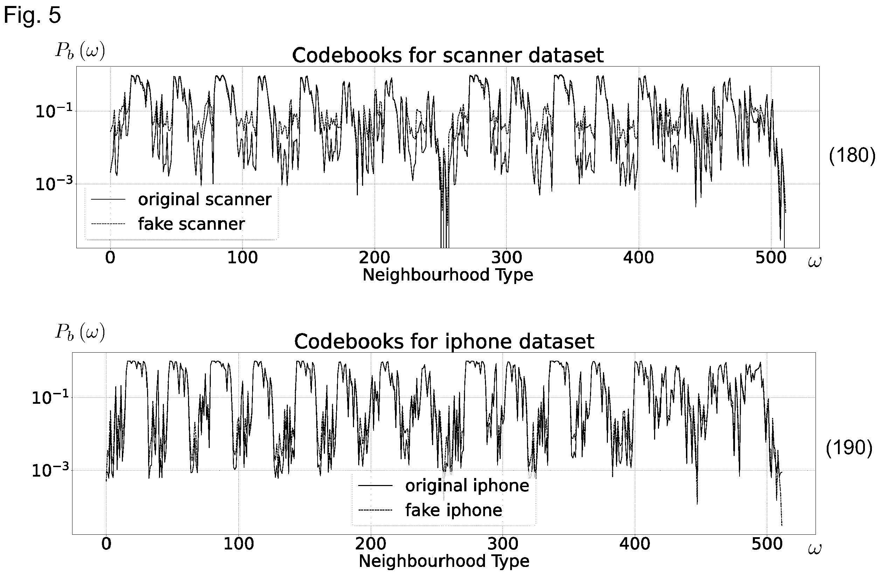

The resulting probability of bit error depends on the configuration of pattern $\omega$, on used printing and acquisition equipment as well as on the method of post-processing and synchronization. The resulting estimated probability of bit

error $P_b(\omega)$ for different acquisition devices obtained for patterns/codes printed on the same industrial printer HP Indigo 5500 are shown in fig. 5, namely in the upper part of fig. 5 if acquired by the flatbed scanner Epson Perfection V850 Pro at 2400 dpi (180) and in the lower part of fig. 5 if acquired by the mobile phone iPhone 12 Pro (190). A set of 512 different patterns are identified as representatives of $\omega$ for the pattern size 3x3 that form a codebook obtained during the training stage, i.e. $\Omega=2^9=512$. For obtaining the probability of bit error $P_b(\omega)$ shown in fig. 5, 50 images acquired from 50 printed original patterns/codes with about 100 subpatterns within the same patterns/code have been used. This allows to produce a quite accurate estimation of $P_b(\omega)$ for each pattern $\omega$. The probability of bit error is computed based on the Otsu's binarization of acquired images with respect to the corresponding bits in the binary patterns of specified configuration with the neighborhood $\omega_{i,j}$. The patterns with low probability of bit error are referred to as reliable patterns or can be considered as reliable channels that communicate binary zeros or ones. It is remarkable that the probabilities of bit error for the original CDP and fakes differ for various patterns, which is a very important factor for reliable authentication. In fact, for reasons of comparison, the corresponding estimated probabilities of bit error $P_b(\omega)$ are also presented in fig. 5 for fake patterns/codes produced based on a machine learning estimation attack such as set out in [8]. One can observe some patterns or binary channels where the probability of bit errors practically coincide for both original and fake samples. This means that these patterns do not represent high distinguishability for the targeted authentication task. The errors close to 1 can be interpreted as a bit flipping. Thus, the patterns with the smallest probability of bit error represent the highest distinguishability between the corresponding original and fake patterns/images. The probability of error of fakes for these patterns is higher that those for originals. Therefore, selecting patterns $\omega$ where the probability of error is smaller than a certain threshold $\mu$ will increase distinguishability. Since the amount of reliable patterns, i.e. the patterns with small probability of bit error, is smaller than the unreliable ones, the overall masking effect of unreliable patterns is dominating and the originals and fakes are weakly distinguishable if all patterns are used. This explains the fact that typical prior art metrics based on the aggregation of pixel-wise or symbol-wise similarity metrics fail to distinguish original patterns/images from high quality fakes.

Based on the technical teaching of the present invention such as provided above, it is of interest to work with the most distinguishable features that, in the case considered here, correspond to the reliable patterns. Alternatively, one can also choose a function $\psi(1-P_b(\omega))$ that maps $P_b(\omega)$ into the values between 0 and 1, whereas value 0 corresponds to the unreliable patterns characterized by high values of $P_b(\omega)$ and 1 to the reliable ones characterized by small values of $P_b(\omega)$.

It should be also pointed out that the reliable patterns are quasi-invariant to the acquisition device, such as shown for example in fig. 5 by comparing its upper part (180) and its lower part (190). However, due to the different value of the bit error probability in each pattern, the threshold should be chosen as a function of the imaging device.

The impact of the value of threshold parameter $\mu$ on the distinguishability of original and fake patterns/codes for different acquisition devices is shown in the series of experiments for the above mentioned acquisition devices, namely the flatbed scanner Epson Perfection V850 Pro and the mobile phone iPhone 12 Pro. The authentication procedure illustrated in fig. 2 is based on this distinguishability and consists of the following steps. The probability of bit error, reflecting the pattern reliability and estimated at the training stage, is computed for each pixel of the digital reference template $t$ in the form of a mask map m (110). This mask can be represented as a "hard" mask containing 0s for the unreliable patterns and 1s for the reliable ones or as a "soft" mask reflecting a soft/weighted transition from 0 to 1 as scaled sigmoid function as a function of the estimated bit error probability.

To exemplify the hard mask $m$ case, which contains 1 in the positions characterized by low probability of bit error, e.g. for each neighborhood pattern $\omega_{i,j}$ in $t$, one retrieves the corresponding probability of bit-flipping $P_b(\omega_{i,j})$ in the codebook corresponding to the pattern with the index $\omega$. Here, one converts the binary configuration of the pattern $\omega$ into the corresponding index. Then, the mask $m_{i,j}=[P_b(\omega_{i,j})<\mu]$ is computed for some fixed value of threshold parameter $\mu\in[0,1]$ for each pixel $i,j$ within the reference template $t$. Using $\mu=1$ corresponds to the case when all patterns are considered as reliable and are aggregated for the score s (125) produced by the score computation (120) mentioned above. Fig. 5 illustrates a notion of reliable patterns according to the above definition. Although such a definition is relatively coarse and does not reflect the deviations of the probability of bit error among the reliable patterns, one may nevertheless demonstrate that it allows to considerably enhance the authentication accuracy by disregarding unreliable patterns from the aggregated score. Moreover, more accurate strategies using the above mentioned soft pattern reliability estimation can be considered, as will be demonstrated below.

Authentication strategies

There are several authentication strategies based on the proposed measure of pattern reliability. Several of them will be exemplified here below in more detail, whereas other strategies may be considered analogously by following the same principles.

**Authentication system based on weighted average score and single decision rule**

Typically, the authentication strategies in CDP applications are based on measuring a similarity score between the reference template $t$ and probe image $y$. Generally, either the Pearson correlation $\overline{P}_{corr}(t,y)$ or the Hamming distance $\overline{D}_{corr}(t,t)$, where $t=\phi(y)$ is the estimate of the reference template $t$, are used as similarity score [4,5]. Here below, the notation of bar is used to highlight that the considered scores have an averaged nature and all patterns are treated uniformly Alternatively, knowing the average probability of bit error $\overline{P}_b$ estimated for all patterns, one can use the negative log-likelihood score (LLS) defined as:

$$\overline{d}\left(\tilde{\boldsymbol{t}},\boldsymbol{t}\right)_{LLS}=-\log Pr\left(\tilde{\boldsymbol{T}}=\tilde{\boldsymbol{t}}\,|\,\boldsymbol{T}\right)=-\sum_{i,j}\log \overline{P}_b^{|\tilde{t}_{i,j}-t_{i,j}|}+\log\left(\left(1-\overline{P}_b\right)^{1-|\tilde{t}_{i,j}-t_{i,j}|}\right).$$

At the same time, as mentioned above, the probability of bit error is not stationary over the pattern/code and in each location $(i,j)$ it takes its own value $P_b(\omega_{i,j})$ as a function of the local neighborhood $\omega_{i,j}$. For this reason, all the above mentioned metrics, neglecting this non-stationarity, fail to distinguish originals from high quality fakes.

To overcome this shortcoming, the present invention proposes to use a non-stationary version of these metrics. For example, a non-stationary revision of the above negative LLS can be represented as:

$$d\left(\tilde{\boldsymbol{t}},\boldsymbol{t}\right)_{LLS}=-\log Pr\left(\tilde{\boldsymbol{T}}=\tilde{\boldsymbol{t}}\,|\,\boldsymbol{T}\right)=-\sum_{i,j}\log Pr\left(\tilde{\boldsymbol{T}}_{i,j}=\tilde{t}_{i,j}\,|\,\omega_{i,j}\right)$$

$$-\sum_{i,j}\log\left(P_b\left(\omega_{i,j}\right)^{|\tilde{t}_{i,j}-t_{i,j}|}\right)+\log\left(\left(1-P_b\left(\omega_{i,j}\right)\right)^{1-|\tilde{t}_{i,j}-t_{i,j}|}\right).$$

This score takes into account the fact that each pattern $\omega$ in the location $(i,j)$, i.e. pattern $\omega_{i,j}$, has the corresponding probability of bit error $P_b(\omega_{i,j})$, as schematically shown in fig. 4.

In general, other metrics based on a stationary assumption, such as the Pearson correlation or the Hamming distance, can be re-formulated such as to take into account the described non-stationarity, too. A possible way to tackle the non-stationarity of the probability of bit error for different patterns is based on a generalized masked score that is defined as:

$$s\left(\boldsymbol{t},\boldsymbol{y}\right)=1/C_m\sum_{i,j}m_{i,j}\,d\left(t_{i,j},\tilde{t}_{i,j}\right),$$

where $d(t_{i,j},\tilde{t}_{i,j})$ denotes the pixel-wise distance between the digital reference template $t$ and its estimate $\tilde{t}$ computed from the probe image $y$ or directly from the probe image $y$ and $C_m=\sum_{i,j}m_{i,j}$. In turn, the probe image $y$ can represent either the original pattern/code or a fake. The similarity distance can also represent various metrics including the above considered negative LLS.

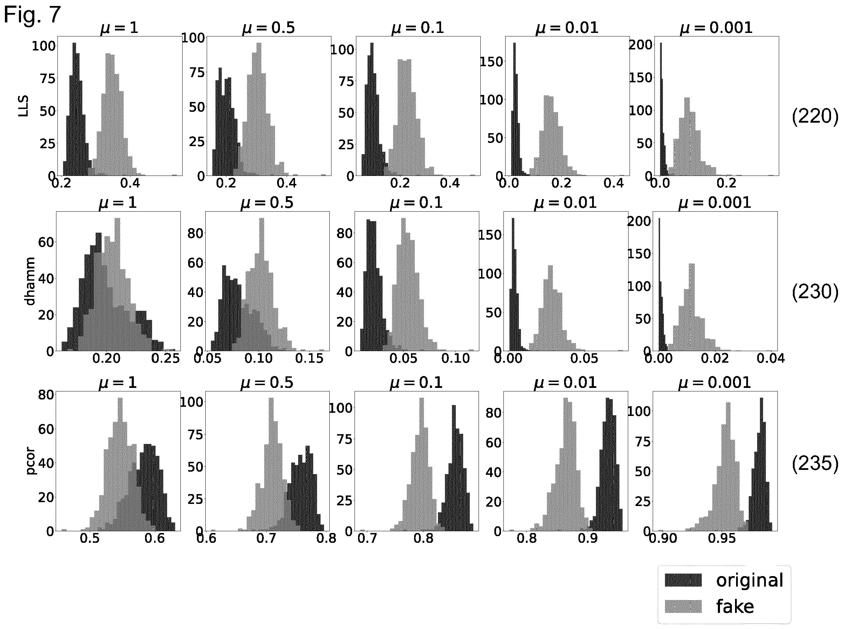

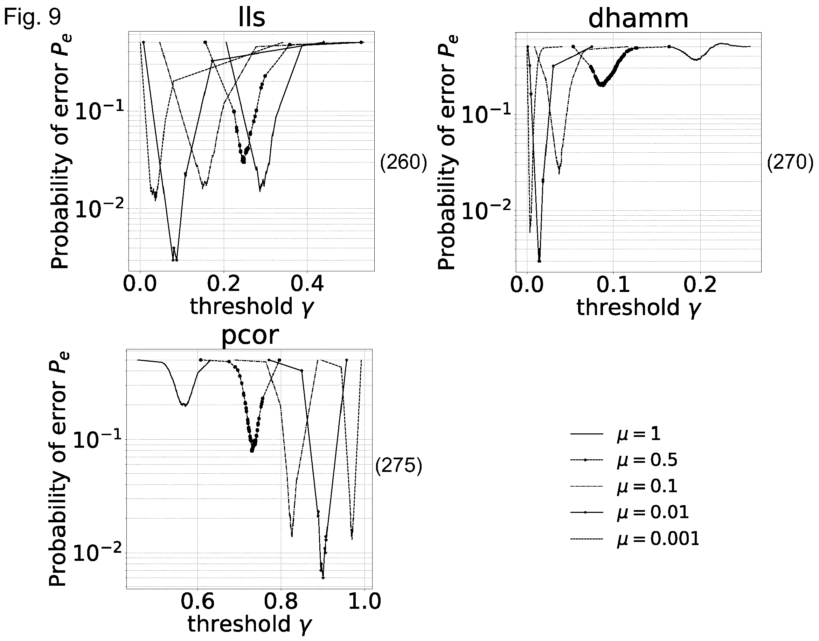

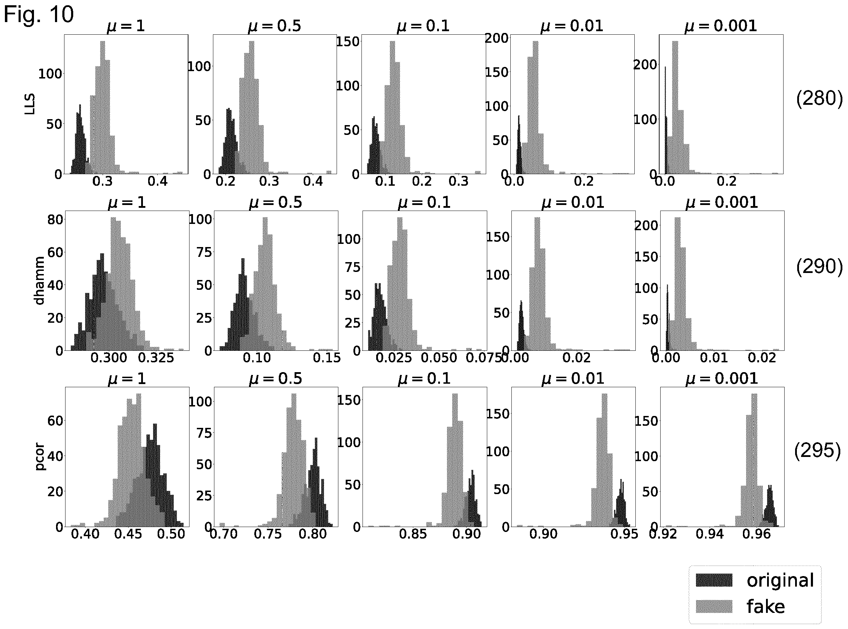

To illustrate the role of the mask $m$ on the authentication accuracy for different similarity metrics, the mask $m$ has been estimated for several values of the threshold $\mu$. The experiments are performed for the above mentioned scanner and mobile phone. The distribution of scores for 500 printed patterns/codes based on the negative LLS, denoted as LLS, on the Hamming distance, denoted as dhamm, and on the Pearson correlation, denoted as Pcor, for $\mu=1$, $\mu=0.5$, $\mu=0.1$, $\mu=0.01$, $\mu=0.001$ are illustrated in figure 7, for the scanner, and in figure 10, for the mobile phone. The plots illustrate the distribution of these scores for different values of threshold parameter $\mu$. The case $\mu=1$ corresponds to the situation where all patterns contribute to the final score and no weighting is applied. The latter case represents the classical similarity scores used in prior art. The results shown in figures 7 and 9 clearly demonstrate that the overlap between the distributions of similarity scores for the original and fake CDP changes as a function of the threshold parameter $\mu$ and the best separability is obtained for $\mu=0.01$ for the considered similarity scores and imaging devices.

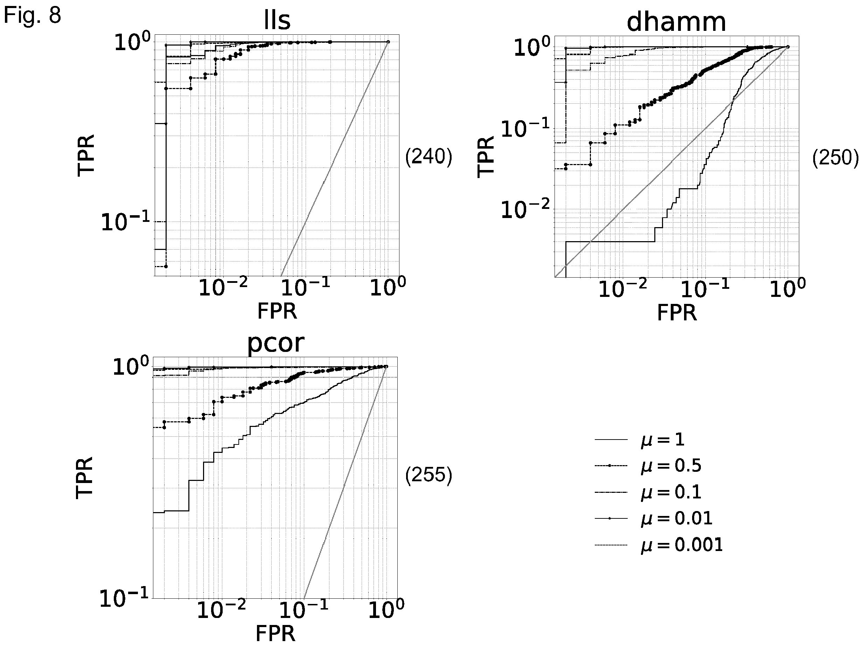

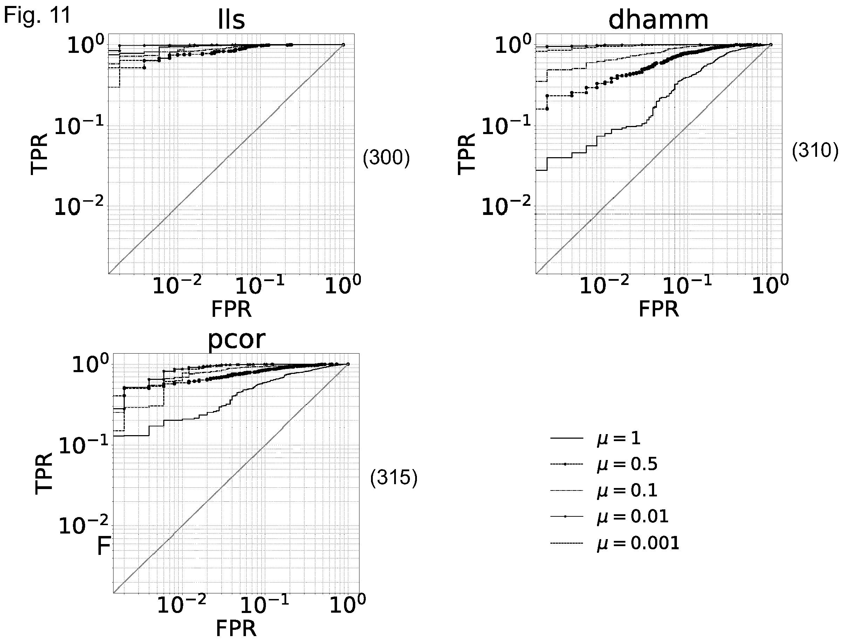

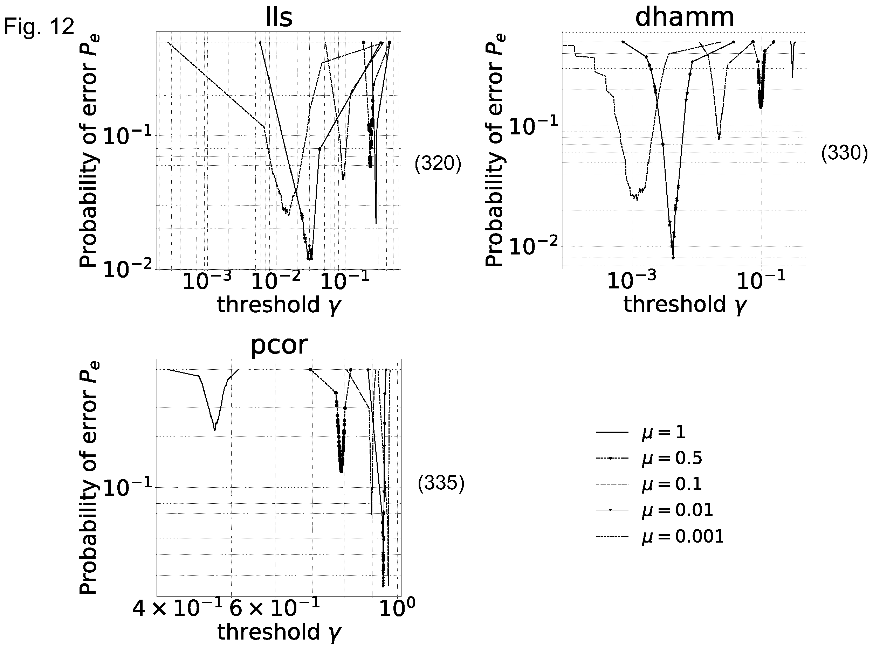

To objectively characterize this performance improvement, the receiver operational characteristic (ROC) and average probability of authentication error is plotted in figures 8 and 9 for the scanner, respectively in figures 11 and 12 for the iPhone. These plots have an illustrative nature only and were computed under the assumption of known fakes, while in real case applications the fakes are not known and cannot be used for optimization of the algorithm. The average probability of error achieves its minimum for $\mu=0.01$ for an optimum value of the authentication threshold $\gamma$ selected according to the Bayesian binary classification strategy. It is important to note that the classical metrics without weighing correspond to the case when $\mu=1$. For both imaging devices, it corresponds to the worst performance which explains the inability of classical metrics to distinguish high quality fakes from the originals based on digital template authentication. The approach proposed by the present invention enhances the authentication performance by at least one order of magnitude. Furthermore, the enhancement is observed for both hard estimation $\tilde{t}=\phi(y)$, where $\phi(.)$ denotes an estimator of $t$, and soft estimation $\tilde{t}=y$ in the considered metrics. Therefore, as demonstrated above, a reliable authentication with a fraction of one percent probability of error is achievable for the mobile phone solely based on digital reference templates, without using complex neural networks, nor intensive training, nor large numbers of training examples, nor access to the physical templates at the time of authentication. This greatly improves the accuracy in comparison to the classical cases when $\mu=1$.

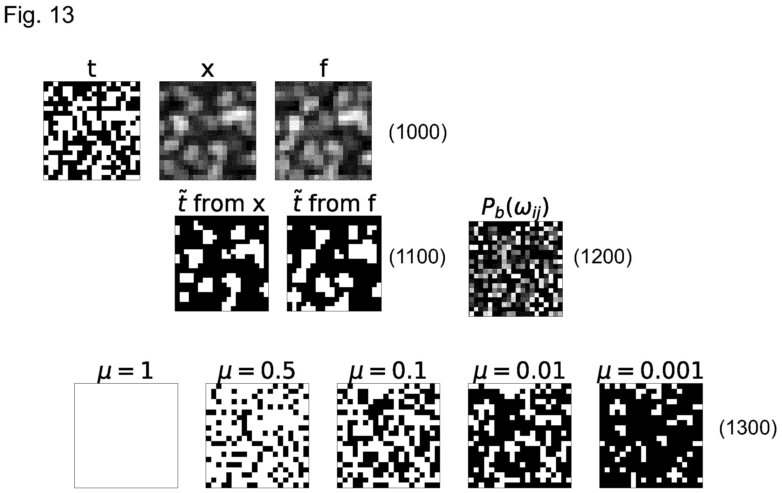

In order to illustrate the nature of masking applied to the CDP of originals and fakes at different values of threshold parameter $\mu$, fig. 13 shows the details of results obtained for the iPhone 12 Pro dataset. The digital reference template $t$, the original CDP $x$ and a fake $f$ are shown at (1000). The estimations of reference template $\tilde{t}=\phi(x)$ and $\tilde{t}=\phi(f)$ are shown at (1100). The pixel-wise probability of bit error estimated from training data and applied to the reference template $t$ is shown, at (1200), for each pixel. Finally, the different masks $m$ for threshold values $\mu=1$, $\mu=0.5$, $\mu=0.1$, $\mu=0.01$, $\mu=0.001$ applied to the pixel-wise probability of bit error (1200) are shown at (1300). For $\mu=1$ all pixels are taken together for the score s (125) produced by the score computation (120) mentioned above. When the threshold decreases, only the pixels corresponding to a low probability of bit error below the chosen threshold contribute to the score.

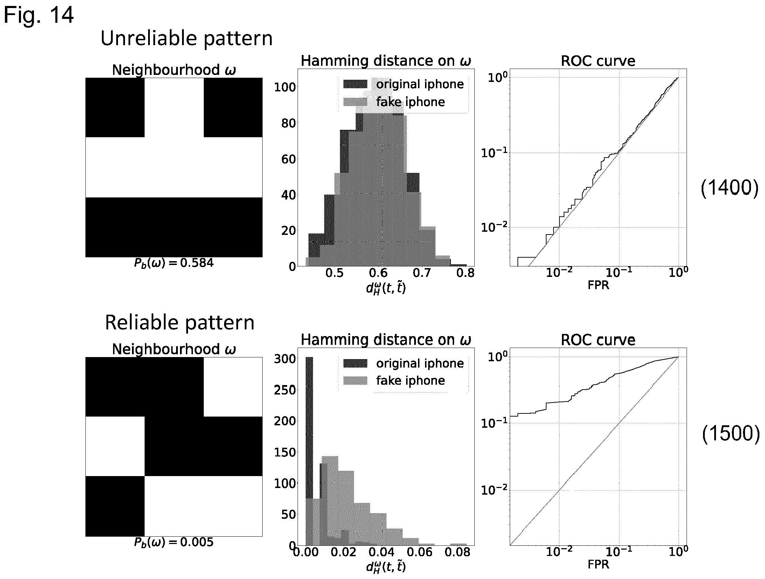

Fig. 14 illustrates the aggregated performance for an unreliable pattern (1400) and a reliable one (1500) with the Hamming distance being used as a score for the iPhone 12 Pro dataset. It is clearly visible that, for the unreliable pattern, the histograms of originals and fakes overlap, which contributes to the weak ROC performance. When the reliable pattern is considered, the level of overlapping is decreased and the ROC curve is improved. Overall, it is clear that choosing multiple reliable patterns further improves the performance of the resulting aggregated score, such as shown in figures 7-12.

**Authentication based on average weighted scores and one-class classifier**

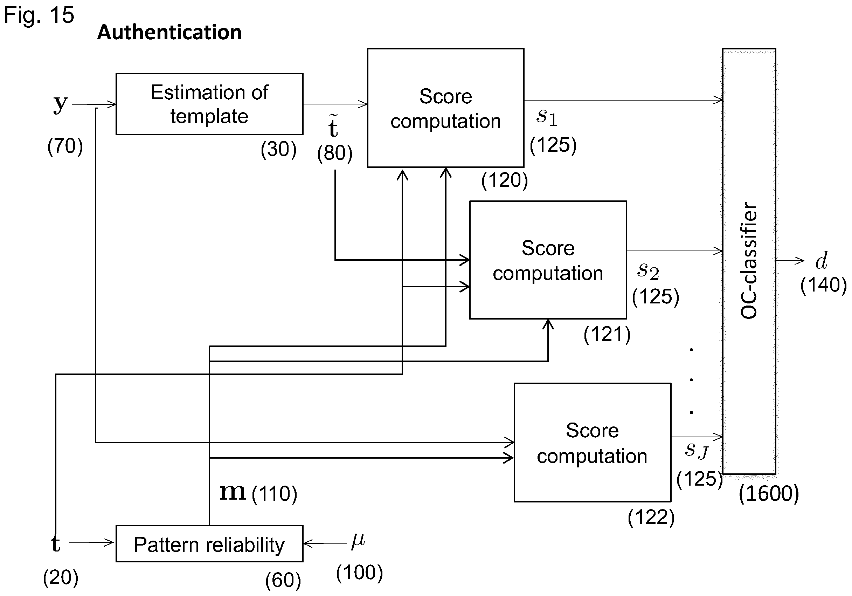

To further improve the authentication accuracy especially for low-quality imaging devices or high-quality fakes in view of prior ambiguity about the fakes, one can use several scores produced by the weighted metrics, as considered above, jointly with a one-class (OC) classifier. Fig. 15 schematically illustrates a possible architecture implementing this strategy. The $J$ scores $s_1,...,s_J$ produced such as described above, by use of mask $m$ in combination with different similarity metrics, such as the Euclidean $L_2$-norm, the $L_1$-norm or generally an $L_p$-norm, the Pearson correlation, the Hamming distance or the like, or eventually in combination with different values of threshold parameter $\mu$, using the estimated probe reference template $\tilde{t}=\phi(y)$ from probe image $y$ or alternatively directly from the (pre-processed) probe image $y$, are used to form a feature vector for said OC-classifier, which is trained only on the original samples, i.e. by use of a set of training images $\{x_n\}_{n=1}^N$ (10) of copy detection patterns (CDP) representing original objects produced by use of the set of reference templates $\{t_n\}_{n=1}^N$ (25).

**Authentication based on learnable concatenated processing and one-class classification**

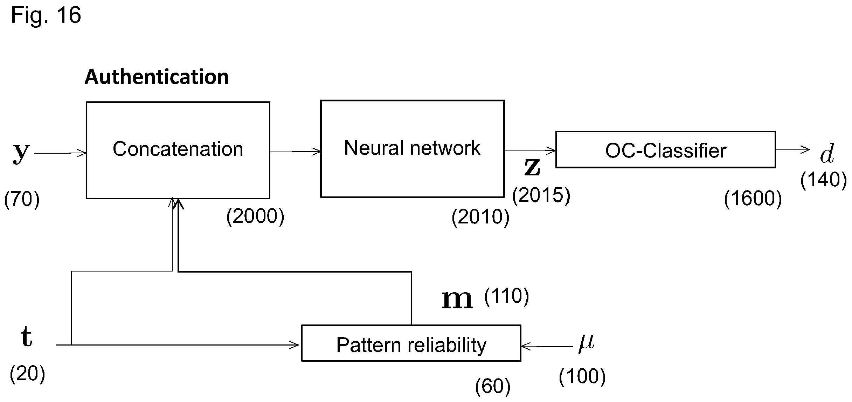

The above considered metrics are chosen based on some assumptions. An alternative approach is to use a learnable aggregation of the probe image $y$, the digital reference template $t$ and the mask $m$, integrating the pattern reliability, via a neural network (2010), such as schematically shown in fig. 16. The corresponding three vectors are concatenated as a tensor $[y,t,m]$, referenced by (2000) in fig. 16, to form this input. Thus, the neural network (2010) performs, by a weighted processing of the tensor $[y,t,m]$, a kind of score computation between the estimate of probe reference template $t$ (80) corresponding to probe image $y$ (70) and a reference template (20) corresponding to an original object and then outputs a score $s$ which usually has the form of a vector $z$ (2015) and which is used for the following OC-classification, performed by a correspondingly trained OC-classifier, in order to produce decision $d$ (140) about authenticity of the physical object represented by the probe image $y$ (70).

**Authentication based on aggregated reliable patterns and OC-classification**

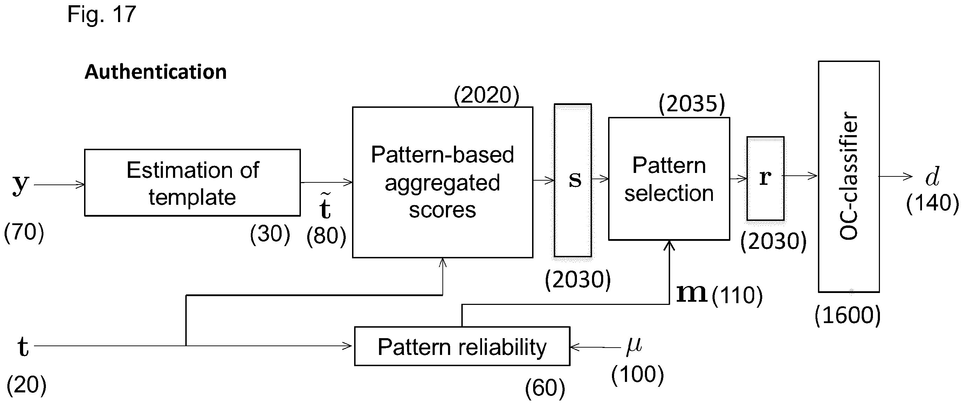

A further alternative approach is to use aggregated reliable patterns in combination with OC-classification, this approach being schematically illustrated in fig. 17. The estimate of reference template $\tilde{t}=\phi(y)$ and the digital reference template $t$ are used to compute a similarity metric for all CDP patches over the probe reference template of the probe image $y$. The patches belonging to the same pattern $\omega$ are aggregated together, such as indicated at (2020) in fig. 17. The vector $s$ (2030) resulting from this aggregation of reliable patterns contains a plurality of pattern-wise similarity scores,

where $s \in \mathbb{R}^{\Omega}$ . The pattern reliability is used to select only the $R < \Omega$ patterns with the high reliability, i.e. patterns inside the CDP having low probability of bit error. The resulting vector $r \in \mathbb{R}^{R}$ is used to train the corresponding OC-classifier (1600), respectively to produce decision d (140) about authenticity.

Integration of copy detection patterns into physical objects

The proposed method may make use of specially created copy detection patterns that are added to physical objects as a standalone feature. Alternatively, it may make use of copy detection patterns that are integrated into existing artwork design parts or existing parts of said objects printed in sufficiently high resolution and possessing sufficient randomness, preferably as halftone or special patterns preventing copying.

The copy detection patterns comprise black or white parts and/or color parts in CMYK or any pantone and/or parts reproduced by special security printing means when carrying some graphical information in color. Authentication may be performed based on a black and white representation of such copy detection patterns with presence of a color symbol being interpreted as black and absence of a color symbol as white.

An interesting option consists in that the copy detection patterns are generated either from a secret key or carry some encrypted reference message encoded using some error correction codes such as Reed-Solomon, LDPC, Turbo or polar codes, with allocation of encoded bits being performed into reliable patterns according to the determined pattern reliability (60) and decoding being performed according to the reliability of each pattern. In this case, authentication may be based on comparison of correspondence between reference message and decoded message.

Therefore, it is important to note that, in the context of the present invention, the terminology "copy detection pattern" shall be interpreted in large manner, such as outlined above. In particular, this terminology isn't restricted at all to patterns like shown in fig. 4, the latter only being used as a simple example to illustrate the principles of the present invention.

Applications and use

The proposed method can be used in a number of applications. Without pretending to provide an exhaustive overview, just a few applications of the proposed method will be named in the following, assuming that similar setups are easily recognized by a person skilled in the art. The following elements can be used for authentication based on the proposed method.

Printed barcodes and OR codes with or without modulation include numerous cases of encoded symbologies carrying some encoded information and thus are adapted to be used as a CDP in the framework of the present invention. Some of these codes can also be additionally modulated to carry secret messages.

Modulated text and alphanumeric symbologies include specially modulated text symbols that carry or not some hidden information or text symbols with halftone modulation in different forms of random or structure dither reproduced in a single color or multiple colors.

Modulated logos include various forms of graphical design representing brand or product logos or associated designs that can be either specially modulated or just halftoned and reproduced in the ways specified above.

Halftone images include a single or multi-color printing by inkjet, laser printing technologies, off-set, digital off-set, flexo and other common printing technologies, laser engraving or thermo-transfer.

Security patterns in different forms such as difficult to clone guilloche or intaglio patterns.

These elements can be used for various authentication applications.

The authentication of packaging that integrates one or several of the elements described above and aims at distinguishing genuine objects from fake objects. The packaging can be considered as, but is not limited to, a primary packaging such as syringe, a capsule, a bottle, etc., and a secondary packaging such as a box, a special shipment box or a container.

The authentication of banknotes in any form of printing including embedded security features.

The authentication of spare parts, in particular spare parts of auto-industry and of medical apparatuses.

The authentication of elements of designs represented by various encoded modalities such as 1D and 2D codes, elements of design including halftone patterns represented in any form of reproduction in black and white or colour representation, security elements representing various special patterns difficult to clone or reproduce ranging from simple random patterns to complex guilloche and intaglio patterns.

The authentication of clothing and fashion industry products with CDP reproduced on cartoon, plastic or textile of appropriate features.

The authentication of printed text, logos and stamps reproduced on any documents such as contracts, certificates, forms, etc..

The authentication of payment cards in any part thereof where CDP-alike structures are present.

The authentication of identity documents including but not limited to identification documents such as ID cards, passports, visas, etc..

At the same time, the above examples do not exclude that the proposed methods are applicable to many kinds of products, such as (but not limited to) the following: Anti-counterfeiting labels or packaging, boxes, shipping invoices, tax stamps, postage stamps and various printed documents associated with the product for authentication and certification of its origin; medical prescriptions; medicines and pharmaceutical products including but not limited to cough drops, prescription drugs, antibiotics, vaccines, etc.; adulterated food, beverages, alcohol as well as coffee and chocolate; baby food and children toys; clothing, footwear and sportswear; health, skin care products, personal care and beauty aids items including perfume, cosmetics, shampoo, toothpaste, etc.; household cleaning goods; luxury goods including watches, clothing, footwear, jewellery, glasses, cigarettes and tobacco, products from leather including handbags, gloves, etc. and various objects of art; car, helicopter and airplane parts and electronic chipsets for computers, phones and consumer electronics; prepaid cards for communications or other services using similar protocol of credit recharging; computer software, video and audio tapes, CDs, DVDs and other means of multimedia data storage with music, movies and video games.

The proposed invention provides the authentication of physical objects and assets to secure a link between these physical objects and assets and the corresponding blockchain and NFT records.

Advantages

In light of the above description of the structure and of the operating mode of the present invention, it is clear that the method of copy detection pattern authentication according to the present invention has a number of advantages over prior art methods. Most importantly, the proposed method has a higher accuracy of authentication solely based on digital reference templates and without any need of knowing fakes at the training time. Moreover, the training process is characterized by a low complexity, does not require any complex neural networks or classifier and can be performed from several images taken from the authentic objects. Furthermore, it does neither require any complex IT infrastructures for the acquisition of characteristics from each printed copy detection pattern nor their storage or communication to the authentication devices. This allows reducing the cost and complexity of the entire system required for authentication. These advantages are achieved by using a more advanced authentication metric in contrast to known approaches.

The invention has been described, illustrated and exemplified in the above drawings and description, however, the description and drawings should be considered as illustrative and not restrictive. Other embodiments and derivatives may be realized by a person skilled in the art based on the technical instruction provided by the present.

References

The following list enumerates all references which are cited in the above description:

[1] B. Zhu, J. Wu, and M. S. Kankanhalli, "Print signatures for document authentication", in Proceedings of the 10th ACM conference on Computer and communications security, 2003, pp. 145-154.

[2] G. Adams, S. Pollard, and S. Simske, "A study of the interaction of paper substrates on printed forensic imaging", in Proceedings of the 11th ACM symposium on Document engineering, 2011, pp. 263-266.

[3] S. Voloshynovskiy, M. Diephuis, F. Beekhof, O. Koval, and B. Keel, "Towards reproducible results in authentication based on physical noncloneable functions: The forensic authentication microstructure optical set (famos)", in 2012 IEEE International Workshop on Information Forensics and Security (WIFS). IEEE, 2012, pp. 43-48.

[4] J. Picard, "Digital authentication with copy-detection patterns", in \$O p-\$ tical Security and Counterfeit Deterrence Techniques V, vol. 5310. International Society for Optics and Photonics, 2004, pp. 176-183.

[5] J. Picard, P. Landry, and M. Bolay, "Counterfeit detection with qr codes", in Proceedings of the 21st ACM Symposium on Document Engineering, 2021, pp. 1-4.

[6] O. Taran, S. Bonev, and S. Voloshynovskiy, "Clonability of anticounterfeiting printable graphical codes: a machine learning approach", in IEEE International Conference on Acoustics, Speech and Signal Processing (ICASSP). IEEE, 2019, pp. 2482-2486.

[7] O. Taran, J. Tutt, T. Holotyak, R. Chaban, S. Bonev, and S. Voloshynovskiy, "Mobile authentication of copy detection patterns: how critical is to know fakes?," in Proc. IEEE International Workshop on Information Forensics and Security (WIFS), Montpellier, France, 2021.

[8] R. Chaban, O. Taran, J. Tutt, T. Holotyak, S. Bonev, and S. Voloshynovskiy, "Machine learning attack on copy detection patterns: are 1x1 patterns cloneable?", in IEEE International Workshop on Information Forensics and Security (WIFS), December 2021.

[9] E. Khermaza, I. Tkachenko, and J. Picard, "Can copy detection patterns be copied? evaluating the performance of attacks and highlighting the role of the detector", in 2021 IEEE International Workshop on Information Forensics and Security (WIFS). IEEE, 2021, pp. 1-6.

[10] R. Yadav, I. Tkachenko, A. Trémeau, and T. Fournel, "Estimation of copysensitive codes using a neural approach", in Proceedings of the ACM Workshop on Information Hiding and Multimedia Security, 2019, pp. 77-82.

[11] J. Picard and P. Landry, "Two dimensional barcode and method of authentication of such barcode", Mar. 14 2017, US Patent 9,594,993.

[12] B. Pulfer, R. Chaban, Y. Belousov, J. Tutt, O. Taran, T. Holotyak, and S. Voloshynovskiy, "Authentication of Copy Detection Patterns under Machine Learning Attacks: A Supervised Approach", in Proc. IEEE International Conference on Image Processing (ICIP), Bordeaux, France, 2022.

[13] R. Chaban, O. Taran, J. Tutt, Y. Belousov, B. Pulfer, T. Holotyak, and S. Voloshynovskiy, "Printing variability of copy detection patterns", in Proc. IEEE International Workshop on Information Forensics and Security (WIFS), Shanghai, China, 2022.

[14] O. Taran, "Reliable classification in digital and physical worlds under active adversaries and prior ambiguity", PhD Thesis, University of Geneva, Switzerland, 2021.

[15] European patent application EP 21182951.0 filed on 30 June 2021.

[16] S. Voloshynovskiy, T. Holotyak, and P. Bas, "Physical object authentication: detection-theoretic comparison of natural and artificial randomness", in 2016 IEEE International Conference on Acoustics, Speech and Signal Processing (ICASSP). IEEE, 2016, pp. 2029-2033.

[17] N. Otsu, "A threshold selection method from gray-level histograms", IEEE Transactions on Systems, Man, and Cybernetics, vol. 9, no. 1, pp. 62-66, 1979.

[18] Ronneberger, Olaf, Philipp Fischer, and Thomas Brox. "U-net: Convolutional networks for biomedical image segmentation.", In International Conference on Medical image computing and computer-assisted intervention, pp. 234-241. Springer, Cham, 2015.

[19] He, Kaiming, Xiangyu Zhang, Shaoqing Ren, and Jian Sun. "Deep residual learning for image recognition.", In Proceedings of the IEEE conference on computer vision and pattern recognition, pp. 770-778. 2016

[20] Dosovitskiy, Alexey, Lucas Beyer, Alexander Kolesnikov, Dirk Weissenborn, Xiaohua Zhai, Thomas Unterthiner, Mostafa Dehghani et al. "An image is worth 16x16 words: Transformers for image recognition at scale.", arXiv preprint arXiv:2010.11929 (2020).

[21] Isola, Phillip, Jun-Yan Zhu, Tinghui Zhou, and Alexei A. Efros. "Image-to-image translation with conditional adversarial networks.", In Proceedings of the IEEE conference on computer vision and pattern recognition, pp. 1125-1134. 2017.

**Claims**

1. Method for authentication of physical objects, by sampling and verifying of a probe image of a copy detection pattern (CDP) representing an object to be authenticated, the method comprising,

at a training stage, the steps of

• acquiring a set of reference templates $\{t_n\}_{n=1}^N$ (25) adapted for production of corresponding original physical objects,

• acquiring a set of training images $\{x_n\}_{n=1}^N$ (10) of copy detection patterns (CDP) representing original objects produced by use of said set of reference templates $\{t_n\}_{n=1}^N$ (25),

• performing pre-processing of the training images in the set of training images $\{x_n\}_{n=1}^N$ by alignment of the training images with the reference templates, and,

at an authentication stage, the steps of

• acquiring a probe image $y$ (70) of a copy detection pattern (CDP) representing an object to be authenticated,
• performing pre-processing of the probe image by alignment of probe image $y$ (70) with the reference template associated with the corresponding original object, and
• producing a decision about authenticity of the physical object represented by the probe image $y$ (70),

**characterised by the fact that** the method further comprises,
at said training stage, the steps of

• producing a set of estimates of reference templates $\{\tilde{t}_n\}_{n=1}^N$ (40) from a set of pre-processed training images representing original objects,
• determining a pattern reliability (60) by measuring the level of correspondence between pre-defined regions of the copy detection pattern (CDP) of at least part of the estimates of reference templates within said set of estimates of reference templates $\{\tilde{t}_n\}_{n=1}^N$ (40) and corresponding reference templates within said set of reference templates $\{t_n\}_{n=1}^N$ (25), and,

at said authentication stage, the steps of

• producing an estimate of probe reference template $\tilde{t}$ (80) from said pre-processed probe image,
• applying the determined pattern reliability (60), by use of a mask $m$ (110) reflecting said pattern reliability (60), in order to weigh regions of the copy detection pattern (CDP) according to its reliability and to allow its weighted use for a score computation (120, 121, 122) between the estimate of probe reference template $\tilde{t}$ (80) corresponding to probe image $y$ (70) and a reference template (20) corresponding to an original object, wherein the step of
• producing a decision about authenticity of the physical object represented by the probe image $y$ (70) is based on at least a score s (125) produced by said weighted score computation (120, 121, 122), said score s allowing to produce a decision d (130, 140) on authenticity of the physical object.

**2.** Method according to the preceding claim 1, **characterized by the fact that** said mask $m$ (110) describing the pattern reliability is produced based on a threshold parameter $\mu$ chosen depending on the desired level of distinguishability of original and fake objects, the score s (125) being produced by said score computation (120) by masking unreliable patterns.

**3.** Method according to one of the preceding claims 1 to 2, **characterized by the fact that** the mask $m$ (110) describing the pattern reliability is produced as a function $\psi(1-P_b(\omega))$ for each pattern $\omega$ that maps the probability of bit error $P_b(\omega)$ to values between 0 and 1, where value 0 corresponds to unreliable patterns having high probability of bit error $P_b(\omega)$ and 1 to reliable ones having low probability of bit error $P_b(\omega)$.

**4.** Method according to one of the preceding claims 1 to 3, **characterized by the fact that** multiple similarity scores $s_1,...,s_J$ are produced by said score computation (120, 121, 122), by use of mask $m$ in combination with different similarity metrics, between the estimate of probe reference template and the reference template, these scores $s_1,...,s_J$ being used as a feature vector for a one-class classifier producing said decision d (140).

5. Method according to one of the preceding claims 1 to 3, **characterized by the fact that** the probe image $y$, the reference template $t$ and the mask $m$ are fused, preferably concatenated, as a tensor $[y,t,m]$ and processed by neural network (2010) which performs, by a weighted processing of the tensor $[y,t,m]$, a score computation between the estimate of probe reference template $\tilde{t}$ (80) corresponding to probe image $y$ (70) and a reference template (20) corresponding to an original object and produces a score s as input for a trained one-class classifier producing said decision d (140).

6. Method according to one of the preceding claims 1 to 3, **characterized by the fact that** the estimate of reference template $\tilde{t}=\phi(y)$ and the digital reference template $t$ are used to compute a similarity metric which is aggregated for each pattern of the probe image $y$ in order to produce a plurality of pattern-wise scores $s$ for each pattern, scores corresponding to reliable patterns being selected by use of the mask $m$ resulting in a vector of reliable scores $r$ which is used for a one-class classifier producing said decision d (140).

7. Method according to one of the preceding claims, **characterised by the fact that** producing the estimates of templates from the pre-processed training images representing original objects is based either on a pre-defined function, preferably on Otsu's binarization, or on learnable functions representing deep learning networks, preferably in a form of convolutional neural networks, networks with skip connections such as U-net or ResNet with or without attention layers, transformers or multi-variate hierarchical neural networks such as denoising diffusion probabilistic models trained to minimize a loss metric between the estimated reference template and the reference template for pair-wise losses and/or a discrimination loss measuring the correspondence between the distributions of the estimated reference template and the reference template.

8. Method according to the preceding claim, **characterized by the fact that** said pair-wise loss measuring the similarity between the estimated reference template and the reference template is chosen from Euclidean $L_2$-norm, $L_1$-norm or generally $L_p$-norm, Pearson correlation, Hamming distance and said discrimination loss is realized as criteria implementing density ratio estimation, MMD, Wasserstein or generalized divergences, U-net with a latent and output space used as a global and local discrimination, the discriminators being applied to the whole data or only to its parts with further aggregation of scores of local discriminators.

9. Method according to one of the preceding claims, **characterized by the fact that** the method comprises use of available fake objects for optimization of performance via optimal selection of threshold parameter(s) $\mu$.

10. Method according to one of the preceding claims, **characterized by the fact that** it comprises use of specially created copy detection patterns that are added to physical objects as a standalone feature and/or use of copy detection patterns that are integrated into existing artwork design parts or existing parts of said objects printed in sufficiently high resolution and possessing sufficient randomness, preferably as halftone or special patterns preventing copying.

11. Method according to one of the preceding claims, **characterized by the fact that** the copy detection patterns comprise black or white parts and/or color parts in CMYK or any pantone and/or parts reproduced by special security printing means when carrying some graphical information in color, authentication being performed based on a black and white representation of said copy detection patterns with presence of a color symbol being interpreted as black and absence of a color symbol as white.

12. Method according to one of the preceding claims, **characterized by the fact that** the copy detection patterns are generated either from a secret key or carry some encrypted reference message encoded using some error correction codes such as Reed-Solomon, LDPC, Turbo or polar codes, with allocation of encoded bits being performed into reliable patterns according to the determined pattern reliability (60) and decoding being performed from each reliable pattern according to the reliability of each pattern, authentication being based on comparison of correspondence between reference message and decoded message.

13. Use of a method according to one of the preceding claims 1 to 12 for an application chosen from the group comprising protection of documents, certificates, contracts, identity documents, packaging, secure labels, stickers, luxury goods, banknotes, checks, electronics, chips, drugs and medications, cosmetics, food, spare and medical parts and components, providing the related object tracking and tracing, circulation and delivery monitoring and connectivity to the corresponding database records including blockchain, automatic quality estimation of newly produced objects and/or anomaly detection during manufacturing by means of inspection of quality of copy detection patterns.

**14.** A device adapted for the implementation of a method according to one of the preceding claims 1 to 12, **characterised by the fact that** the device is chosen from the group consisting of a mobile phone, a smart phone equipped with a camera, a digital photo apparatus, a barcode reader equipped with a camera, a scanning device, a portable microscope connected to any portable device equipped with communication means.

**15.** Computer program means stored in a computer readable medium adapted to implement a method according to one of the preceding claims 1 to 12.

## Fig.1  Training of codebook

$\{\mathbf{x}_n\}_{n=1}^{N}$ (10) → Estimation of template (30) → $\{\tilde{\mathbf{t}}_n\}_{n=1}^{N}$ (40) → Pattern reliability estimation (50) → Pattern reliability (60)

$\{\mathbf{t}_n\}_{n=1}^{N}$ (25)

## Fig. 2  Authentication

$\mathbf{y}$ (70) → Estimation of template (30) → $\tilde{\mathbf{t}}$ (80) → Score computation (120) → $s$ (125) → Decision (130) → $d$ (140)

$\mathbf{m}$ (110)

$\mathbf{t}$ (20) → Pattern reliability (60) ← $\mu$ (100)

EP 4 386 586 A1

Fig. 3      **Training of estimation of template**

$\{\mathbf{x}_n\}_{n=1}^{N}$ ⟶ | Estimation of template | ⟶ $\{\tilde{\mathbf{t}}_n\}_{n=1}^{N}$

(10)

(30)

(40)

$\{\mathbf{t}_n\}_{n=1}^{N}$ ⟶ | Loss |

(25)

(150)

Fig. 4

$j$

$i$

$t_{i,j}$   $\omega_{i,j}$   **t**
(35)   (160)   (20)

**x**
(170)

$\tilde{t}_{i,j}$   $\tilde{\mathbf{t}}$
(85)   (80)

## Fig. 5

$P_b(\omega)$

**Codebooks for scanner dataset**

— original scanner
---- fake scanner

Neighbourhood Type

(180)

$P_b(\omega)$

**Codebooks for iphone dataset**

— original iphone
---- fake iphone

Neighbourhood Type

(190)

Fig. 6

Codebooks for scanner dataset (180)

$P_b(\omega)$

Reliable patterns: $P_b(\omega) \leq \mu$

Fig. 7

Fig. 8

Fig. 9

lls (260)

dhamm (270)

pcor (275)

μ = 1
μ = 0.5
μ = 0.1
μ = 0.01
μ = 0.001

Fig. 10

Fig. 11

dhamm (310)

lls (300)

pcor (315)

$\mu = 1$
$\mu = 0.5$
$\mu = 0.1$
$\mu = 0.01$
$\mu = 0.001$

TPR

FPR

Fig. 12

dhamm (330)

lls (320)

pcor (335)

$\mu = 1$
$\mu = 0.5$
$\mu = 0.1$
$\mu = 0.01$
$\mu = 0.001$

Probability of error $P_e$

threshold $\gamma$

Fig. 13

Fig. 14

## Unreliable pattern

**Neighbourhood $\omega$**

$P_b(\omega) = 0.584$

**Hamming distance on $\omega$**

- original iphone
- fake iphone

$d_H^\omega(t, \tilde{t})$

**ROC curve**

FPR

(1400)

## Reliable pattern

**Neighbourhood $\omega$**

$P_b(\omega) = 0.005$

**Hamming distance on $\omega$**

- original iphone
- fake iphone

$d_H^\omega(t, \tilde{t})$

**ROC curve**

FPR

(1500)

EP 4 386 586 A1

Fig. 15

**Authentication**

EP 4 386 586 A1

Fig. 16

**Authentication**

y → Concatenation → Neural network → z → OC-Classifier → d
(70)        (2000)           (2010)      (2015)      (1600)      (140)

m (110)

t → Pattern reliability ← μ
(20)        (60)              (100)

EP 4 386 586 A1

Fig. 17

**Authentication**

EP 4 386 586 A1

Europäisches
Patentamt

European
Patent Office

Office européen
des brevets

# EUROPEAN SEARCH REPORT

Application Number

EP 22 21 2904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 242 239 A1 (SCANTRUST SA [CH]) 8 November 2017 (2017-11-08) | 1-4,6, 9-11, 13-15 | INV. G06F18/2135 G06F18/22 |
| Y | * figures 1, 2, 5-11, 13 * | 12 | G06F18/2413 |
| A | * paragraph [0001] – paragraph [0009] * * paragraph [0015] * * paragraph [0020] – paragraph [0022] * * paragraph [0039] – paragraph [0045] * * paragraph [0052] * * paragraph [0058] – paragraph [0062] * * paragraph [0086] – paragraph [0090] * * paragraph [0112] * ----- | 5 | G06F18/2433 G06V10/22 G06V10/24 G06V10/28 G06V10/44 G06V10/50 G06V10/74 G06V10/764 G06V10/82 |
| X | EP 3 008 666 B1 (SICPA HOLDING SA [CH]) 20 November 2019 (2019-11-20) * figures 1, 4A-5A, 10, 11 * * paragraph [0001] – paragraph [0006] * * paragraph [0012] – paragraph [0014] * * paragraph [0020] – paragraph [0021] * * paragraph [0025] – paragraph [0026] * * paragraph [0033] – paragraph [0036] * * paragraph [0041] * * paragraph [0053] * * paragraph [0067] – paragraph [0070] * ----- | 1,13-15 | G06V10/98 G06V20/80 G06V20/00 G03G21/04 H04N1/00 |
| Y | WO 2015/067725 A1 (SCANTRUST SA [CH]) 14 May 2015 (2015-05-14) * paragraph [0030] * ----- -/-- | 12 | |

TECHNICAL FIELDS
SEARCHED      (IPC)

G06F
G06V
G03G
H04N

The present search report has been drawn up for all claims

| Place of search | Date of completion of the search | Examiner |
|---|---|---|
| The Hague | 21 March 2023 | Konya, Iuliu |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

........................................................................

& : member of the same patent family, corresponding
    document

EPO FORM 1503 03.82 (P04C01)

33

Europäisches
Patentamt

European
Patent Office

Office européen
des brevets

# EUROPEAN SEARCH REPORT

Application Number

EP 22 21 2904

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZAGORUYKO SERGEY ET AL: "Learning to compare image patches via convolutional neural networks", 2015 IEEE CONFERENCE ON COMPUTER VISION AND PATTERN RECOGNITION (CVPR), IEEE, 7 June 2015 (2015-06-07), pages 4353-4361, XP032793890, DOI: 10.1109/CVPR.2015.7299064 * figures 1-3 * * page 4354, column 1, paragraph 4 – page 4356, column 2, paragraph 3 * ----- | 1-6,9-15 | G06F18/211 G06V10/771 |

TECHNICAL FIELDS
SEARCHED    (IPC)

The present search report has been drawn up for all claims

| Place of search | Date of completion of the search | Examiner |
|---|---|---|
| The Hague | 21 March 2023 | Konya, Iuliu |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P04C01)

Europäisches
Patentamt

European
Patent Office

Office européen
des brevets

**Application Number**

EP 22 21 2904

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-6, 9-15

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

**Application Number**

**EP 22 21 2904**

The Search Division considers that the present European patent application does not comply with the requirements of unity of invention and relates to several inventions or groups of inventions, namely:

**1. claims: 1-6, 9-15**

> **how to learn a similarity scoring function for object**
> **authentication**
> ---

**2. claims: 7, 8**

> **how to produce template estimates from pre-processed images**
> ---

## ANNEX TO THE EUROPEAN SEARCH REPORT
## ON EUROPEAN PATENT APPLICATION NO.

EP 22 21 2904

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2023

| Patent document cited in search report | | Publication date | Patent family member(s) | | Publication date |
|---|---|---|---|---|---|
| EP 3242239 | A1 | 08-11-2017 | NONE | | |
| EP 3008666 | B1 | 20-11-2019 | BR | 112013015346 A2 | 20-09-2016 |
| | | | EP | 3008666 A1 | 20-04-2016 |
| | | | US | 2016110630 A1 | 21-04-2016 |
| | | | WO | 2014198315 A1 | 18-12-2014 |
| WO 2015067725 | A1 | 14-05-2015 | CN | 105706107 A | 22-06-2016 |
| | | | EP | 3066612 A1 | 14-09-2016 |
| | | | ES | 2718528 T3 | 02-07-2019 |
| | | | JP | 6505732 B2 | 24-04-2019 |
| | | | JP | 2016540329 A | 22-12-2016 |
| | | | PL | 3066612 T3 | 28-06-2019 |
| | | | RU | 2016122271 A | 11-12-2017 |
| | | | US | 2016267369 A1 | 15-09-2016 |
| | | | US | 2017124441 A1 | 04-05-2017 |
| | | | US | 2018197053 A1 | 12-07-2018 |
| | | | WO | 2015067725 A1 | 14-05-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9594993 B

- EP 21182951

**Non-patent literature cited in the description**

- **B. ZHU ; J. WU ; M. S. KANKANHALLI.** Print signatures for document authentication. *Proceedings of the 10th ACM conference on Computer and communications security,* 2003, 145-154
- **G. ADAMS ; S. POLLARD ; S. SIMSKE.** A study of the interaction of paper substrates on printed forensic imaging. *Proceedings of the 11th ACM symposium on Document engineering,* 2011, 263-266
- Towards reproducible results in authentication based on physical noncloneable functions: The forensic authentication microstructure optical set (famos). **S. VOLOSHYNOVSKIY ; M. DIEPHUIS ; F. BEEKHOF ; O. KOVAL ; B. KEEL.** 2012 IEEE International Workshop on Information Forensics and Security (WIFS). IEEE, 2012, 43-48
- Digital authentication with copy-detection patterns. **J. PICARD.** $O p-$ tical Security and Counterfeit Deterrence Techniques V. International Society for Optics and Photonics, 2004, vol. 5310, 176-183
- **J. PICARD ; P. LANDRY ; M. BOLAY.** Counterfeit detection with qr codes. *Proceedings of the 21st ACM Symposium on Document Engineering,* 2021, 1-4
- Clonability of anticounterfeiting printable graphical codes: a machine learning approach. **O. TARAN ; S. BONEV ; S. VOLOSHYNOVSKIY.** IEEE International Conference on Acoustics, Speech and Signal Processing (ICASSP). IEEE, 2019, 2482-2486
- **O. TARAN ; J. TUTT ; T. HOLOTYAK ; R. CHABAN ; S. BONEV ; S. VOLOSHYNOVSKIY.** Mobile authentication of copy detection patterns: how critical is to know fakes?. *Proc. IEEE International Workshop on Information Forensics and Security (WIFS),* 2021
- **R. CHABAN ; O. TARAN ; J. TUTT ; T. HOLOTYAK ; S. BONEV ; S. VOLOSHYNOVSKIY.** Machine learning attack on copy detection patterns: are 1x1 patterns cloneable?. *IEEE International Workshop on Information Forensics and Security (WIFS),* December 2021

- Can copy detection patterns be copied? evaluating the performance of attacks and highlighting the role of the detector. **E. KHERMAZA ; I. TKACHENKO ; J. PICARD.** 2021 IEEE International Workshop on Information Forensics and Security (WIFS). IEEE, 2021, 1-6
- **R. YADAV ; I. TKACHENKO ; A. TRÉMEAU ; T. FOURNEL.** Estimation of copysensitive codes using a neural approach. *Proceedings of the ACM Workshop on Information Hiding and Multimedia Security,* 2019, 77-82
- **J. PICARD ; P. LANDRY.** *Two dimensional barcode and method of authentication of such barcode,* 14 March 2017
- **B. PULFER ; R. CHABAN ; Y. BELOUSOV ; J. TUTT ; O. TARAN ; T. HOLOTYAK ; S. VOLOSHYNOVSKIY.** Authentication of Copy Detection Patterns under Machine Learning Attacks: A Supervised Approach. *Proc. IEEE International Conference on Image Processing (ICIP), Bordeaux, France,* 2022
- **R. CHABAN ; O. TARAN ; J. TUTT ; Y. BELOUSOV ; B. PULFER ; T. HOLOTYAK ; S. VOLOSHYNOVSKIY.** Printing variability of copy detection patterns. *Proc. IEEE International Workshop on Information Forensics and Security (WIFS),* 2022
- Reliable classification in digital and physical worlds under active adversaries and prior ambiguity. **O. TARAN.** PhD Thesis. University of Geneva, 2021
- Physical object authentication: detection-theoretic comparison of natural and artificial randomness. **S. VOLOSHYNOVSKIY ; T. HOLOTYAK ; P. BAS.** 2016 IEEE International Conference on Acoustics, Speech and Signal Processing (ICASSP). IEEE, 2016, 2029-2033
- **N. OTSU.** A threshold selection method from gray-level histograms. *IEEE Transactions on Systems, Man, and Cybernetics,* 1979, vol. 9 (1), 62-66

- U-net: Convolutional networks for biomedical image segmentation. **RONNEBERGER, OLAF ; PHILIPP FISCHER ; THOMAS BROX.** International Conference on Medical image computing and computer-assisted intervention. Springer, 2015, 234-241
- **HE, KAIMING ; XIANGYU ZHANG ; SHAOQING REN ; JIAN SUN.** Deep residual learning for image recognition. *Proceedings of the IEEE conference on computer vision and pattern recognition,* 2016, 770-778
- **DOSOVITSKIY, ALEXEY ; LUCAS BEYER ; ALEXANDER KOLESNIKOV ; DIRK WEISSENBORN ; XIAOHUA ZHAI ; THOMAS UNTERTHINER ; MOSTAFA DEHGHANI et al.** An image is worth 16x16 words: Transformers for image recognition at scale. *arXiv preprint arXiv:2010.11929,* 2020
- **ISOLA, PHILLIP ; JUN-YAN ZHU ; TINGHUI ZHOU ; ALEXEI A. EFROS.** Image-to-image translation with conditional adversarial networks. *Proceedings of the IEEE conference on computer vision and pattern recognition,* 2017, 1125-1134